# FASCICULE DE BREVET EUROPEEN

(11) **EP 2 894 414 B1**
(45) Date de publication et mention de la délivrance du brevet: **21.07.2021**
(21) Numéro de dépôt: 14194195.5
(22) Date de dépôt: 20.11.2014
(51) Int. Cl.: F24F 12/00, F24F 7/06, F24F 13/24, F16L 55/033, F24F 7/007

(54) **Unite de ventilation à piege à son**
Lüftereinheit mit Geräuschdämpfer
Ventilation unit with sound trap

(30) Priorité: 20.11.2013 FR 1361431
(43) Date de publication de la demande: 15.07.2015
(73) Titulaire: Atlantic Climatisation et Ventilation, 69330 Meyzieu (FR)
(72) Inventeur: Fourmentin, Dorian, 69003 LYON (FR)
(74) Mandataire: Ipsilon

(56) Documents cités:
- EP-A1- 2 306 108
- EP-A1- 2 642 215
- EP-A2- 2 436 996
- EP-A2- 2 574 794
- DE-U1-202011 103 909
- None

## Description

La présente invention se rapporte à une unité de ventilation.

Dans le domaine de la ventilation, il est connu de mettre en œuvre des unités de ventilation pour créer un flux de ventilation dans le réseau de ventilation.

Ces unités de ventilation comprennent un ou plusieurs ventilateurs qui créent de fait des nuisances sonores dans le réseau de ventilation jusqu'aux pièces du local ventilé. Pour diminuer ces nuisances, il est connu plusieurs solutions.

Une première solution connue consiste à disposer des pièges à sons dans le réseau de ventilation, entre l'unité de ventilation et le local. Des pièges à sons sont notamment décrits dans EP-A-1 580 494 ou EP-A- 1 998 119.

Ces pièges à sons augmentent de fait l'encombrement du réseau de ventilation, ainsi que son coût.

En outre, étant considérés comme des accessoires, l'installateur est obligé de placer lui-même ces pièges à sons sur le chantier de l'installation, amenant donc une complexité d'installation, des risques d'erreurs pouvant notamment provoquer des fuites dans le réseau de ventilation, ou tout simplement un oubli qui pénalise l'utilisateur final

Enfin, la maintenance des pièges à sons, dispersés dans le long du réseau de ventilation est souvent délicate, le démontage/nettoyage, notamment de ces pièges à sons, se révélant problématique, en particulier lorsque ces composants sont installés dans des parties inaccessibles du réseau aéraulique.

Selon une deuxième solution connue, un parement en mousse est réalisé à l'intérieur de l'unité de ventilation. Ces parements prennent la forme de couche généralement d'épaisseur constante sur les parois du caisson de l'unité de ventilation.

Cette solution présente cependant essentiellement un intérêt du point de vue de l'isolation thermique. En effet, les effets d'atténuations acoustiques ne sont généralement pas au rendez-vous. En outre, ces parements provoquent dans certains cas des pertes de charge qui nuisent au niveau de performances de l'unité de ventilation.

Enfin une troisième solution est connue dans les unités de ventilation double flux comprenant deux ventilateurs et un échangeur thermique pour permettre des échanges thermiques entre les flux d'air créés par les deux ventilateurs. Selon cette troisième solution, le ventilateur destiné à créer le flux d'insufflation d'air dans le local est disposé en amont de l'échangeur thermique. Ainsi, l'air, animé par le ventilateur concerné, passe par l'échangeur thermique avant d'être diffusé dans le réseau de ventilation. L'échangeur thermique permet alors la fonction de piège à son.

Cette solution présente cependant des inconvénients. Notamment, on ne peut généralement traiter qu'un seul des flux (l'air insufflé, critique pour le confort utilisateur), car la fonction de dérivation de l'échangeur thermique est très difficilement réalisable avec les deux ventilateurs en amont de l'échangeur. Cette solution dégrade également les échanges thermiques au niveau de l'échangeur thermique ou accentue l'importance des fuites au sein du caisson du fait de la présence d'un différentiel de pression entre les deux flux.

L'invention vise à proposer une unité de ventilation ne présentant pas inconvénients susmentionnés.

Il également connu, de WO-A-2012/066184, un dispositif de régulation de flux d'air de ventilation comprenant une entrée, une sortie décalée angulairement par rapport à l'entrée et, entre l'entrée et la sortie, des éléments de suppression de bruit qui guident également le flux d'air de ventilation. Il est en outre connu du document EP-A1-2 306 108 un ensemble de ventilation d'une ou plusieurs pièces d'un immeuble, comprenant des éléments d'absorption acoustique. Le document EP-A-2642215 décrit une unité de ventilation comprenant les caractéristiques du préambule de la revendication 1.

À cette fin, la présente invention propose une unité de ventilation selon la revendication 1.

Suivant des modes de réalisation préférés, l'invention comprend une ou plusieurs des caractéristiques suivantes :
- la section du conduit aéraulique est sensiblement constante ;
- la section du conduit aéraulique est variable, une paroi séparant par exemple le conduit aéraulique en deux conduits sur une partie au moins de la longueur du conduit ;
- le conduit aéraulique est courbe ;
- le au moins un bloc de matériau absorbant comprend au moins une singularité comme un insert en matériau distinct du matériau absorbant acoustique et/ou une découpe, à l'extérieur du conduit aéraulique ;
- le conduit aéraulique est formé :
   ∘ par une pluralité de blocs de matériau absorbant superposés, éventuellement en matériaux différents ; ou
   ∘ par un bloc de matériau absorbant unique ;
- la section du au moins un bloc de matériau absorbant acoustique est au moins deux fois supérieure, de préférence au moins trois fois supérieure, de manière plus préférée quatre fois supérieure, à la section du conduit aéraulique ;
- le ou les blocs de matériau absorbant acoustique est/sont recouvert/s extérieurement, de préférence d'un matériau adapté à éviter un rayonnement de bruit depuis l'intérieur du conduit aéraulique formé par le bloc de matériau absorbant acoustique ;
- le matériau absorbant acoustique est recouvert, au niveau du conduit aéraulique, d'un revêtement adapté à transmettre la pression acoustique au matériau absorbant acoustique et, de préférence, à limiter les pertes de charge dans le conduit aéraulique et/ou à éviter la diffusion de fibres que pourrait laisser échapper le matériau absorbant ;
- la hauteur de l'ensemble formé par le au moins un bloc de matériau absorbant est supérieure, de préférence au moins deux fois supérieure, au diamètre de l'orifice ;
- le caisson forme, entre le ventilateur et l'orifice, un logement, de préférence étanche, le au moins un bloc de matériau absorbant acoustique étant disposé dans le logement, de préférence de manière amovible ;
- la section transversale du logement est sensiblement identique à la section d'un espace recevant le ventilateur ;
- la hauteur du logement est sensiblement égale à la distance entre le ventilateur et l'orifice de sortie du caisson ;
- la hauteur de l'ensemble du au moins un bloc de matériau absorbant acoustique est sensiblement égale à la hauteur du logement ;
- la section du conduit aéraulique, côté ventilateur, est sensiblement égale ou supérieure, à la section d'un orifice de sortie de l'espace recevant le ventilateur ;
- le matériau absorbant acoustique est l'un parmi une mousse polyuréthane, une mousse en éthylène-propylène-diène monomère, de la mélamine, de la laine de roche, de la laine de verre, de la mousse agglomérée ;
- l'unité de ventilation comprend un deuxième ventilateur, un échangeur thermique pour permettre l'échange de calories entre les flux d'air créés par les deux ventilateurs, les premier et deuxième ventilateurs étant de préférence disposés en aval de l'échangeur thermique ;
- l'unité de ventilation comprend en outre au moins un deuxième bloc de matériau absorbant acoustique disposé en aval du deuxième ventilateur ;
- le au moins un deuxième bloc de matériau absorbant acoustique présente une section inférieure à la section du au moins un premier bloc de matériau absorbant acoustique ;
- le au moins un deuxième bloc de matériau acoustique a une profondeur inférieure à la profondeur du au moins un premier bloc de matériau absorbant acoustique, de préférence d'au moins 20% ;
- le au moins un deuxième bloc de matériau acoustique une hauteur inférieure à la hauteur du premier bloc de matériau absorbant acoustique, de préférence d'au moins 10% ;
- le au moins un deuxième bloc de matériau absorbant acoustique est en un matériau ou des matériaux différent/s du au moins un premier bloc de matériau absorbant acoustique ;
- le premier ventilateur est destiné à créer un flux d'air d'insufflation dans un local à ventiler, et le deuxième ventilateur est destiné à créer un flux d'air d'extraction depuis le local à ventiler ;
- le bloc de matériau absorbant acoustique est amovible et forme un bloc autoportant ayant des dimensions et une forme extérieure permettant une mise en position finale du bloc de matériau absorbant acoustique dans le caisson sans moyens de fixation du bloc de matériau acoustique au caisson ni pièces de liaison entre les pièces de matériau absorbant acoustique formant le bloc de matériau acoustique ;
- le logement est étanche pour permettre une étanchéité externe entre le logement et l'extérieur de ce logement ; et
- le caisson comporte au moins un premier orifice de sortie d'air adapté à être raccordé à un réseau de d'insufflation d'air dans un local et au moins un deuxième orifice de sortie d'air adapté à être raccordé à un réseau d'extraction d'air du local, le logement étant également étanche pour permettre une étanchéité interne entre un flux d'air circulant à travers le premier orifice de sortie et un flux d'air circulant à travers le deuxième orifice de sortie.

L'invention concerne également un procédé de manipulation d'une unité de ventilation telle que décrite précédemment, comprenant les étapes consistant à :
- ouvrir partiellement ou totalement un capot fermant une paroi du caisson ;
- en présence d'un bloc de matériau absorbant acoustique dans le logement retirer le bloc de matériau absorbant acoustique présent, ou en l'absence de bloc de matériau absorbant acoustique dans le logement disposer un bloc de matériau absorbant acoustique, à l'intérieur du logement dans une position mettant en communication de fluide la sortie du ventilateur et l'orifice de sortie via le conduit aéraulique ; et
- fermer le capot fermant la paroi du caisson.

D'autres caractéristiques et avantages de l'invention apparaîtront à la lecture de la description qui suit de modes de réalisation préférés de l'invention, donnée à titre d'exemple et en référence aux dessins annexés.
La figure 1 représente schématiquement une unité de ventilation partiellement démontée.
La figure 2 représente schématiquement le bloc de matériau absorbant acoustique mis en œuvre dans l'unité de ventilation de la figure 1.
La figure 3 représente schématiquement vu de dessus l'orifice du conduit aéraulique au niveau de la sortie d'air d'un ventilateur de l'unité de ventilation de la figure 1.
Les figures 4 et 5 représentent schématiquement la section longitudinale d'exemples de blocs de matériau absorbant acoustique pouvant être mis en œuvre dans l'unité de ventilation de la figure 1.
Les figures 6 à 10 représentent schématiquement la section transversale d'exemples de blocs de matériau absorbant acoustique pouvant être mis en œuvre dans l'unité de ventilation de la figure 1.

Dans la suite de la description, les éléments identiques ou de fonction identique portent le même signe de référence. À fin de concision de la présente description, les éléments identiques aux différents exemples ne sont pas décrits en regard de chacun de ces exemples. En d'autres termes, seules les différences entre les différents exemples sont décrites de manière détaillée, les éléments communs étant décrits en regard d'un seul exemple.

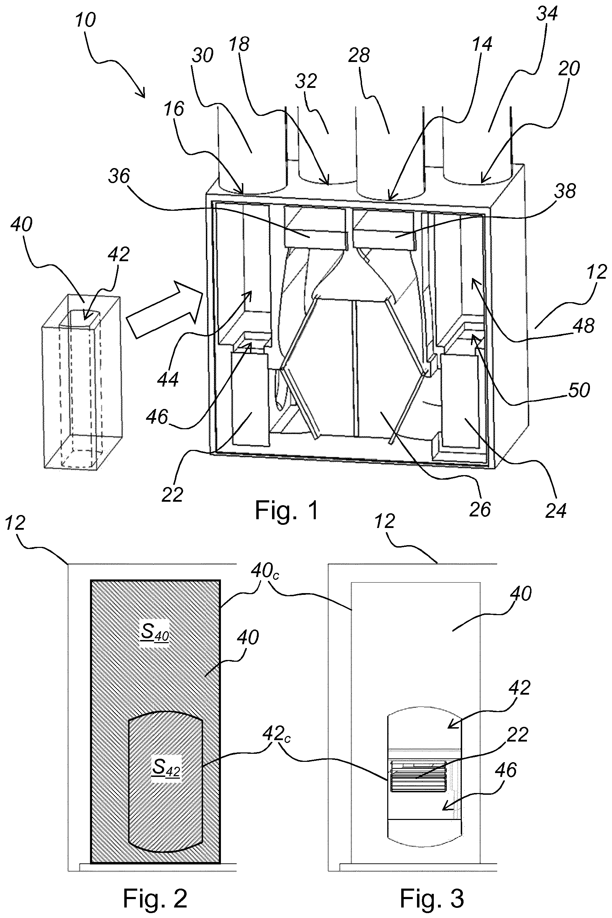

La figure 1 illustre un exemple d'unité de ventilation 10. Ici, l'unité de ventilation 10 est une unité de ventilation double flux. Par conséquent, l'unité de ventilation 10 comprend :
- dans un caisson 12 de forme sensiblement parallélépipédique et comprenant quatre orifices : un orifice d'entrée d'air d'insufflation 14, un orifice de sortie d'air d'insufflation 16, un orifice d'entrée d'air d'extraction 18 et un orifice de sortie d'air d'extraction 20 ;
- un ventilateur d'insufflation 22 et un ventilateur d'extraction 24 disposés respectivement entre l'orifice d'entrée d'air d'insufflation 14 et l'orifice de sortie d'air d'insufflation 16, pour l'un, et entre l'orifice d'entrée d'air d'extraction 18 et l'orifice de sortie d'air d'extraction 20, pour l'autre ; et
- un échangeur thermique 26 pour permettre des échanges thermiques entre le flux d'air d'insufflation créé par le ventilateur d'insufflation 22 et le flux d'air d'extraction créé par le ventilateur d'extraction 24.

Les quatre orifices 14, 16, 18, 20 sont adaptés à être reliés à des conduits aérauliques respectifs 28, 30, 32, 34. Ainsi, ces orifices présentent de préférence une section circulaire de diamètre 125 ou 160 mm, standards dans le domaine de la ventilation.

Des filtres 36, 38 sont disposés dans le caisson 12, en amont de l'échangeur thermique 26.

Par ailleurs, un bloc de matériau absorbant acoustique 40, ici représenté à l'extérieur du caisson 12 est adapté à être reçu dans un logement 44 formé dans le caisson 12 entre la sortie 46 du ventilateur d'insufflation 22 et l'orifice de sortie d'air d'insufflation 16. De préférence, le logement 44 est étanche. De préférence encore, le logement 44 possède une hauteur sensiblement égale à la distance entre le ventilateur 22 et l'orifice de sortie d'air d'insufflation 16, pour optimiser la taille du bloc de matériau absorbant acoustique qui peut être reçu dans l'unité de ventilation. Par hauteur sensiblement égale, on entend ici une hauteur égale, ou inférieure d'au plus 20%.Quand le bloc de matériau absorbant acoustique 40 est reçu dans le logement 44, un conduit aéraulique 42, formé dans le bloc de matériau absorbant acoustique 40, met en communication de fluide la sortie 46 du ventilateur d'insufflation 22 et l'orifice de sortie d'air d'insufflation 16.

Selon un mode de réalisation de l'unité de ventilation 10 évoqué dans le paragraphe précédent, le logement 44 est étanche pour permettre une étanchéité interne, d'une part, entre le flux d'air circulant entre les orifices d'entrée et de sortie d'air d'insufflation 14 et 16 et le flux d'air circulant entre les orifices d'entrée et de sortie d'air d'extraction 18 et 20 et externe, d'autre part, entre le logement 44 et l'extérieur de ce logement 44. L'étanchéité interne du logement 44 concerne en notamment, la paroi séparant les flux d'air d'insufflation et d'extraction disposée entre le logement 44 et l'espace débouchant sur le filtre 36. Ces étanchéités interne et externe du logement 44 permettent l'utilisation d'un matériau absorbant acoustique poreux autorisant des fuites d'air à travers le bloc de matériau acoustique 40, par exemple du type mousse polyuréthane, de sorte que l'absorption acoustique réalisée par le bloc de matériau absorbant acoustique 40 est augmentée par rapport aux dispositifs d'absorption acoustique dans lesquels le bloc d'absorption acoustique est réalisé dans un matériau permettant une étanchéité du conduit aéraulique par rapport à l'extérieur du bloc d'absorption acoustique. L'étanchéité du logement 44 combinée à l'utilisation d'un matériau poreux pour le bloc de matériau absorbant acoustique 40 permet une augmentation de l'absorption acoustique tout en limitant les fuites vers l'extérieur du caisson ou entre les flux d'air circulant à l'intérieur du caisson 12.

Il est à noter ici que la section du conduit aéraulique 42 au niveau de l'orifice de sortie de l'air d'insufflation 16 est inférieure ou sensiblement égale à la section de l'orifice de sortie de l'air d'insufflation 16. Par section sensiblement égale, on entend une section égale à plus ou moins 10%. De préférence, la section du conduit aéraulique est inscrite dans la section de l'orifice de sortie de l'air d'insufflation (en d'autres termes, vue de dessus - ou plus généralement dans la direction de l'écoulement d'air - la section du conduit est comprise dans la section de l'orifice de sortie).

Ainsi, on ne crée pas ou tout du moins on limite les pertes de charges qui peuvent se créer par une réduction brusque de la section de passage d'air, ces pertes de charge étant nuisibles à la fonction d'insufflation d'air de l'unité de ventilation 10. En outre, cela permet un guidage efficace du flux d'air d'insufflation ce qui limite également les pertes de charges. En particulier, ici, la section du conduit aéraulique 42 au niveau de l'orifice de sortie d'air d'insufflation 16 reprend partiellement la forme arrondie de l'orifice de sortie d'air d'insufflation 16, l'arrondi étant tronqué au niveau de deux côtés opposés de la section. En d'autres termes, et comme cela est visible sur la figure 2, la section S₄₂ du conduit aéraulique 42 au niveau de l'orifice de sortie d'air d'insufflation 16 prend une forme sensiblement rectangulaire dont deux côtés sont arrondis (voir contour 42_{c} du conduit aéraulique sur la figure 2) pour correspondre sensiblement à l'arrondi de l'orifice de sortie d'air d'insufflation 16.

Le bloc de matériau absorbant acoustique 40 est de préférence disposé dans le caisson 12 de manière amovible, ceci afin de faciliter son remplacement et/ou son entretien. Pour se faire, le bloc de matériau absorbant acoustique 40 peut avoir sensiblement les mêmes dimensions que le logement 44, ceci permettant de maintenir en position le bloc de matériau absorbant acoustique 40, notamment par rapport à la sortie 46 du ventilateur d'insufflation 22, d'une part, et par rapport à l'orifice de sortie d'air d'insufflation 16, d'autre part, sans mettre en œuvre de moyens de fixation. De plus, cela permet une optimisation des performances acoustiques du bloc de matériau absorbant acoustique, ainsi que la limitation des pertes de charges, que pourraient créer un brusque changement de section de passage d'air.

Selon un autre mode de réalisation compatible avec le bloc de matériau absorbant acoustique 40 décrit précédemment, le bloc de matériau absorbant acoustique 40 est amovible et forme un bloc autoportant. On entend par bloc autoportant, un bloc formé d'une ou plusieurs pièces de matériau absorbant acoustique qui, une fois assemblées pour former le bloc de matériau acoustique 40 dans le cas de plusieurs pièces, confère des dimensions et une forme extérieure au bloc de matériau acoustique 40 permettant une mise en position finale du bloc de matériau absorbant acoustique 40 dans le caisson 12 sans moyens de fixation du bloc de matériau acoustique 40 au caisson 12 ni pièce de liaison entre les pièces de matériau absorbant acoustique formant le bloc. Les moyens de fixation précités sont par exemple de la colle, des vis, du ruban adhésif ou des rivets. On entend par position finale, une position du bloc de matériau absorbant acoustique 40 permettant l'alignement entre conduit aéraulique 42, la sortie du ventilateur 22 et l'orifice de sortie 16. En d'autres termes, la position finale est la position du bloc de matériau absorbant acoustique 40 dans laquelle la sortie du ventilateur 22 débouche dans une première extrémité du conduit aéraulique 42 et dans laquelle une deuxième extrémité du conduit aéraulique 42 débouche dans l'orifice de sortie 16. En particulier, pour limiter les pertes de charge, la position finale peut être la position du bloc de matériau absorbant acoustique 40 dans laquelle la sortie du ventilateur 22 est inscrite dans la première extrémité du conduit aéraulique 42 et dans laquelle la deuxième extrémité du conduit aéraulique 42 est inscrite dans l'orifice de sortie 16. Le caractère autoportant du bloc de matériau acoustique 40 permet ainsi, en plus des avantages cités précédemment pour le bloc de matériau absorbant acoustique 40, de limiter le nombre de manipulations du bloc de matériau absorbant acoustique 40 pour disposer le bloc de matériau absorbant acoustique 40 en position finale dans le caisson 12 de sorte que le montage et le démontage du bloc de matériau absorbant acoustique 40 est d'avantage facilité.

Il est également proposé un procédé d'installation d'une unité de ventilation 10. On entend ici par procédé d'installation d'une unité de ventilation 10, un procédé permettant le montage, le démontage ou le remplacement d'un bloc de matériau acoustique 40 d'une unité de ventilation 10. Le montage du bloc de matériau absorbant acoustique 40 est réalisé suivant un procédé de montage comprenant une étape d'ouverture - totale ou partielle - d'un capot (non représenté sur les figures) fermant le caisson 12, une étape de disposition du bloc de matériau absorbant acoustique 40 à l'intérieur du logement 44 dans une position mettant en communication de fluide la sortie du ventilateur 22 et l'orifice de sortie 16 via le conduit aéraulique 42, et une étape de fermeture du capot. De manière similaire, le démontage d'un bloc de matériau absorbant acoustique 40 présent à l'intérieur du logement 44 peut être réalisé en remplaçant l'étape de disposition du bloc de matériau absorbant acoustique 40 par une étape de retrait du bloc de matériau absorbant acoustique 40 présent à l'intérieur du logement 44. De manière encore similaire, le remplacement du bloc de matériau absorbant acoustique 40 peut être réalisé, suivant le procédé de montage, en ajoutant, antérieurement à l'étape de disposition d'un bloc de matériau absorbant acoustique 40 à l'intérieur du logement 44, une étape de retrait du bloc de matériau absorbant acoustique 40 déjà présent à l'intérieur du logement 44.

Tel que représenté sur la figure 1, le capot est formé de sorte que le bloc de matériau absorbant acoustique 40 peut être monté ou démonté suivant une direction perpendiculaire à la direction de circulation du flux d'air entre la sortie du ventilateur 22 et l'orifice de sortie 16. De manière alternative, le capot peut être formé de sorte que le bloc de matériau absorbant acoustique 40 peut être monté ou démonté suivant une direction s'étendant le long de la direction de circulation du flux d'air entre la sortie du ventilateur 22 et l'orifice de sortie 16. En d'autres termes, le capot peut être la paroi du caisson 12 dans laquelle les orifices de sortie et d'entrée 14, 16, 18 et 20 sont formés.

Le matériau absorbant acoustique dans lequel le bloc de matériau isolant acoustique est réalisé peut notamment être l'un parmi une mousse polyuréthane, une mousse en éthylène-propylène-diène monomère, de la mélamine, de la laine de roche, de la laine de verre, de la mousse agglomérée. Ces matériaux présentent en effet une bonne absorption acoustique.

De plus, le bloc de matériau absorbant acoustique 40 peut être recouvert extérieurement d'un matériau adapté à limiter le rayonnement de bruit depuis l'intérieur du conduit aéraulique 42 formé par le bloc de matériau absorbant acoustique 40. Ceci permet en effet de limiter les nuisances sonores dues au bruit rayonné depuis l'intérieur du caisson 12, ceci sans impacter le flux d'air créé par le ventilateur d'insufflation 22.

Tel que représenté sur la figure 1, la section transversale du conduit aéraulique 42 formé dans le bloc de matériau absorbant acoustique est sensiblement constante. Ici, cette section transversale du conduit aéraulique 42 est sensiblement rectangulaire avec des coins arrondis. Cette forme du conduit aéraulique 42 est en effet la plus simple à réaliser et présente déjà un effet important de réduction des nuisances sonores de l'unité de ventilation 10.

La section transversale S₄₀ du bloc de matériau absorbant acoustique 40 (c'est-à-dire la section du bloc de matériau absorbant acoustique incluant la section du conduit aéraulique ou, en d'autres termes, la section définie par le contour extérieur 40_{c} du bloc de matériau absorbant acoustique) est ici au moins deux fois supérieure à la section transversale du conduit aéraulique S₄₂. Ce rapport de sections permet en effet d'obtenir une bonne absorption acoustique. De préférence, cependant, ce rapport de section est supérieur à trois, voire supérieur à quatre, l'effet obtenu étant alors sensiblement amélioré.

Également pour obtenir un bon effet d'absorption acoustique, la hauteur du bloc de matériau absorbant acoustique 40 est supérieure au diamètre de l'orifice de sortie d'air d'insufflation 16. De préférence, pour obtenir un meilleur effet d'absorption acoustique, la hauteur du bloc de matériau absorbant acoustique 40 est deux fois supérieure au diamètre de l'orifice de sortie d'air d'insufflation 16. Si l'orifice n'est pas à section circulaire, on entend par diamètre la plus grande distance entre deux points du contour de l'orifice.

Le bloc de matériau absorbant acoustique 40 est en outre disposé à proximité immédiate (c'est-à-dire à moins de 3 cm, de préférence en contact) de la sortie d'air 46 du ventilateur d'extraction d'air 22 de manière à optimiser la longueur du bloc de matériau absorbant acoustique. En outre, une augmentation de cette distance diminue à la fois les performances acoustiques et les performances aérauliques. Disposer le bloc de matériau absorbant acoustique à proximité immédiate de la sortie d'un ventilateur est notamment possible dans le cas où le ventilateur d'insufflation d'air 22 est formé, comme ici, par une turbine centrifuge à action.

En outre, la section du conduit aéraulique est sensiblement égale ou supérieure à la section de la sortie d'air 46 du ventilateur d'insufflation 22 (ou de l'espace recevant le ventilateur ; voir figure 3), ceci afin de limiter les pertes de charges du flux d'air créé par le ventilateur qui pourraient nuire aux performances de l'unité de ventilation. De préférence, la section de la sortie d'air 46 du ventilateur est inscrite dans la section du conduit aéraulique.

Par ailleurs, pour limiter l'encombrement de l'unité de ventilation 10, le logement 44 est réalisé au droit entre l'orifice de sortie d'air d'insufflation 16 et la sortie d'air 46 du ventilateur d'insufflation 22 (ou de l'espace dans lequel est reçu le ventilateur d'insufflation). Dans ce cas, toujours afin de limiter l'encombrement, il est intéressant de prévoir comme cela est représenté sur la figure 1, que la section du logement 44 est sensiblement identique à la section du boîtier du moto-ventilateur, dans le cas où le ventilateur est reçu dans un boîtier, ou de la volute de ventilateur, dans la direction perpendiculaire au flux d'air créé par le ventilateur, à l'épaisseur de matière près, ou tout du moins de la section de l'espace dans lequel est reçu le ventilateur d'insufflation. Par suite, le bloc de matériau absorbant acoustique 40 peut présenter également une section transversale sensiblement identique à la section du ventilateur d'insufflation d'air 22. En d'autres termes, les dimensions du bloc de matériau absorbant acoustique 40 selon sa profondeur et sa largeur sont au plus égales aux dimensions du ventilateur d'insufflation d'air 22 selon sa profondeur et sa largeur, respectivement. On optimise ainsi l'encombrement du caisson, ainsi que la quantité de matériau absorbant acoustique mis en œuvre par rapport à l'espace à disposition dans le caisson 12 et plus particulièrement dans le logement 44.

Il est à noter qu'un second bloc de matériau absorbant acoustique semblable au bloc de matériau absorbant acoustique 40 peut être disposé dans un deuxième logement 48 formé dans le caisson 12 entre la sortie 50 du ventilateur d'extraction 24 et l'orifice de sortie d'air d'extraction 20, de telle sorte que le conduit aéraulique 42 met en communication de fluide la sortie 50 du ventilateur d'extraction 24 et l'orifice de sortie d'air d'extraction 20. Avantageusement, pour des raisons de coût et de risque d'erreur, ce second bloc de matériau absorbant acoustique est identique au bloc de matériau absorbant acoustique 40. Comme cela est visible sur la figure 1, l'orifice de sortie d'air d'insufflation 16 et l'orifice de sortie d'air d'extraction 20 peuvent être décalés dans la profondeur du caisson 12. Dans ce cas, il est intéressant de réaliser le conduit aéraulique 42 décalé par rapport au milieu du bloc de matériau absorbant acoustique 40, de telle sorte que des blocs de matériau absorbant acoustique puissent être mis en œuvre dans les deux logements 44, 48 selon qu'ils sont disposés dans un sens ou (re)tournés.

En outre, pour éviter qu'un bloc de matériau absorbant acoustique soit disposé à l'envers dans un logement 44, 46, ceux-ci peuvent présenter un détrompeur adapté à la forme du bloc de matériau absorbant acoustique. Par exemple, la section transversale du logement peut présenter un angle coupé, tout comme le bloc de matériau absorbant acoustique.

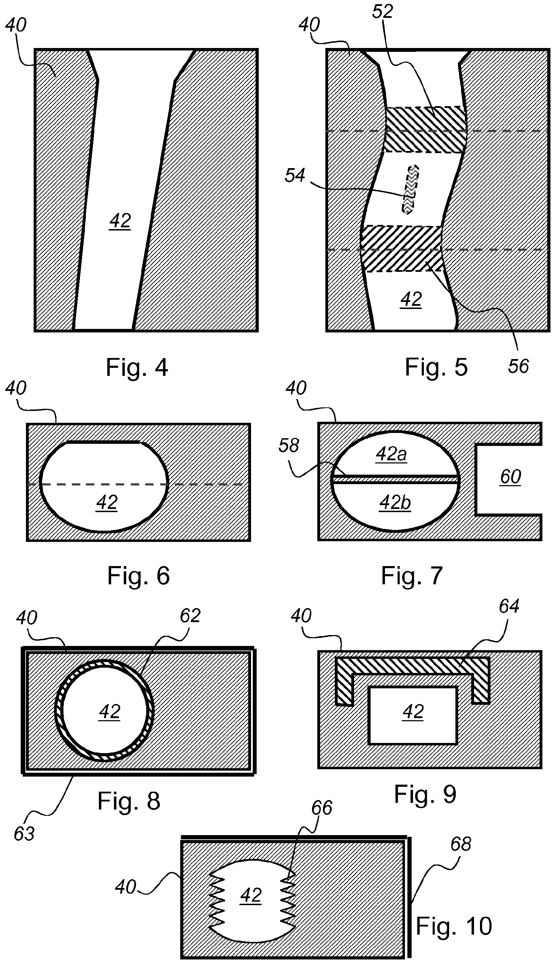

Il est maintenant fait références aux figures 4 à 10 pour illustrer différentes formes envisagées du bloc de matériau absorbant acoustique 40 et du conduit aéraulique 42.

Comme le montre la figure 4, le conduit aéraulique peut être orienté de biais dans le bloc de matériau absorbant acoustique, par exemple pour assurer la mise en communication de fluide de la sortie du ventilateur avec l'orifice de sortie du caisson tout en limitant les pertes de charges.

La figure 4 illustre également que le conduit aéraulique 42 peut présenter une section transversale variable. Ainsi, au niveau de son débouché au niveau de l'orifice de sortie du caisson, le conduit aéraulique 42 présente une forme divergente de sorte que sa section au niveau son débouché est sensiblement identique à la section de l'orifice de sortie du caisson.

La figure 5 illustre un bloc de matériau absorbant acoustique plus complexe.

Tout d'abord le bloc de matériau absorbant acoustique 40 de la figure 5 est réalisé de plusieurs éléments ou plusieurs blocs de matériaux absorbant acoustique unitaires empilés - éventuellement les blocs unitaires peuvent être en matériaux différents ; ils peuvent également être de formes identiques (même s'ils sont en des matériaux différents) ou distinctes - ceci permettant de réaliser des formes plus complexes de conduit aérauliques 42 et d'adapter la forme du conduit à l'application particulière. Ainsi, le conduit aéraulique 42 présente ici une forme de cylindre à section transversale a priori quelconque (bien qu'une section en forme de cercle, de cercle tronqué ou rectangulaire apparaît a priori préférée dans tous les exemples présentés) et une génératrice courbe. On peut ainsi optimiser l'absorption de bruit et les pertes de charges en fonction des besoins des utilisateurs.

En outre, le conduit aéraulique 42 de la figure 5 présente des singularités 52, 54, 56 réalisés dans un matériau qui peut être différent de celui du ou des blocs de matériau absorbant acoustique. La fonction de ces singularités à l'intérieur du conduit aéraulique 42 est de permettre d'atténuer certaines fréquences ciblées. Ces singularités 52, 54, 56 sont par exemple réalisées sous la forme d'inserts. Leur mise en place dans le conduit aéraulique 42 est donc facilitée quand le bloc de matériau absorbant acoustique est formé de plusieurs blocs.

Les figures 6 à 9 illustrent plus particulièrement différentes variantes de la section transversale du bloc de matériau absorbant acoustique et du conduit aéraulique.

Ainsi, la figure 6 illustre un conduit aéraulique dont la section est sensiblement ellipsoïdale mais qui présente une face aplatie. Ceci permet de réduire les pertes de charge du flux d'air traversant le conduit aéraulique 42.

La figure 7 illustre une section du conduit aéraulique coupée en deux parties 42a, 42b, séparées par une paroi 58. Cette séparation de la section du conduit aéraulique en deux parties peut être réalisée sur une partie au moins de la longueur du conduit aéraulique 42. Cette séparation permet d'augmenter les performances d'absorption acoustique du bloc de matériau absorbant acoustique.

La figure 7 illustre en outre que le bloc de matériau absorbant acoustique 40 présente une singularité à l'extérieur du conduit aéraulique 42, en l'espèce une échancrure 60. Cette échancrure permet également de limiter le bruit à certaine(s) fréquence(s) particulières.

Sur la figure 8, la paroi du conduit aéraulique 42 formé dans le bloc de matériau absorbant acoustique est recouverte d'un revêtement 62 adapté à transmettre la pression acoustique au matériau absorbant acoustique et à limiter les pertes de charge dans le conduit aéraulique 42. Le revêtement 62 peut par exemple être de la résine épaisse, un feuillard faisant office de masse lourde, une gaine ou un film plastique, une gaine ou un film métallique micro-perforé(e) ou non, de la peinture. Le revêtement présente de préférence une épaisseur inférieure à 0,5 mm. Ce revêtement vise également à limiter les pertes de charge dans le conduit aéraulique et/ou à éviter la diffusion de fibres que pourrait laisser échapper le matériau absorbant acoustique dans le conduit aéraulique.

En outre, le bloc 40 de la figure 8 est « capoté », c'est-à-dire qu'un capot 63, par exemple métallique, est placé tout autour des quatre faces latérales du bloc. Ce capot recouvre extérieurement le bloc de matériau absorbant acoustique pour limiter le rayonnement de bruit depuis l'intérieur du conduit aéraulique 42 formé par le bloc de matériau absorbant acoustique 40. Ceci permet en effet de limiter les nuisances sonores dues au bruit rayonné depuis l'intérieur du caisson 12, ceci sans impacter le flux d'air créé par le ventilateur d'insufflation 22. Le capot peut être accolé à (éventuellement avec un jeu) voire collé sur bloc de matériau absorbant acoustique. Bien sûr, un tel capot peut être mis en œuvre quelle que soit la section du conduit aéraulique. En outre, le capot peut recouvrir également une ou les deux faces d'extrémités du bloc de matériau absorbant acoustique, avec bien sûr une ou deux ouvertures correspondant au/x débouché/s du conduit aéraulique 42.

La figure 9 illustre un conduit aéraulique 42 de section transversale rectangulaire. Le bloc de matériau absorbant acoustique 40 présente en outre une singularité 64 sous la forme d'un insert en matériau différent du matériau du bloc de matériau absorbant acoustique 40, ceci afin de limiter le bruit à certaines fréquences.

Enfin, la figure 10 illustre un conduit aéraulique 42 dont le contour de la section transversale présente deux côtés opposés avec des dents 66. Cette configuration permet d'optimiser l'absorption acoustique par le bloc de matériau absorbant acoustique 40.

Le bloc de matériau absorbant acoustique est également partiellement recouvert par un capot 68, recouvrant uniquement deux faces latérales adjacentes du bloc de matériau acoustique, seul. Le capot peut être accolé à (éventuellement avec un jeu) voire collé sur bloc de matériau absorbant acoustique. Là encore, ce type de capot peut être mis en œuvre quelle que soit la section du conduit aéraulique. Ce type de capot peut également recouvrir une ou les deux faces d'extrémités du bloc de matériau absorbant acoustique, avec bien sûr une ou deux ouvertures correspondant au/x débouché/s du conduit Ceci permet notamment de faciliter le maintien en position du capot par rapport au bloc de matériau absorbant acoustique.

Bien entendu, la présente invention n'est pas limitée aux exemples et aux modes de réalisation décrits et représentés, mais elle est susceptible de nombreuses variantes accessibles à l'homme de l'art.

Ainsi, le conduit aéraulique peut être coudé, en fonction de l'orientation de la sortie d'air d'extraction du caisson par rapport à la sortie d'air du ventilateur. Le logement formé dans le caisson et qui reçoit le bloc de matériau absorbant acoustique peut lui aussi présenter un coude. Dans ce cas, le bloc de matériau absorbant acoustique (éventuellement formé de plusieurs blocs unitaires) peut avoir une section en « L ».

En outre, l'unité de ventilation peut-être simple flux, c'est-à-dire ne comprendre qu'un ventilateur d'insufflation.

Par ailleurs, dans le cas où l'unité de ventilation est une unité double flux comme illustrée sur la figure 1, elle peut comprendre un unique bloc de matériau absorbant acoustique, de préférence disposée entre le ventilateur d'insufflation et l'orifice de sortie d'air d'insufflation.

Cependant, dans le cas où l'unité de ventilation est une unité double flux, elle peut comprendre deux blocs de matériau absorbant acoustique différents, notamment en matériaux différents. Dans ce cas, le deuxième bloc de matériau absorbant acoustique, mis en œuvre entre le ventilateur d'extraction d'air et la sortie d'air d'extraction, peut présenter des dimensions réduites, limitant ainsi son encombrement et libérant de la place pour disposer, dans le caisson de l'unité de ventilation, l'électronique nécessaire à la commande et au fonctionnement de cette unité de ventilation double flux. Les dimensions du deuxième bloc de matériau absorbant acoustique peuvent également être définies pour traiter des bruits particuliers du réseau d'extraction et/ou pour s'adapter à des niveaux de performances propres.

Ainsi, en particulier, le deuxième bloc de matériau absorbant acoustique peut présenter une section inférieure à la section du premier bloc de matériau absorbant acoustique. Le deuxième bloc de matériau acoustique peut avoir une profondeur inférieure à la profondeur du premier bloc de matériau absorbant acoustique, de préférence d'au moins 20%. Le au moins un deuxième bloc de matériau acoustique peut avoir une hauteur inférieure à la hauteur du premier bloc de matériau absorbant acoustique, de préférence d'au moins 10%.

## Revendications

1. Unité de ventilation (10) comprenant :
- un caisson (12) avec au moins un orifice de sortie (16 ; 20) adapté à être raccordé à un réseau de ventilation, notamment à un réseau d'insufflation d'air dans un local à ventiler,
- au moins un ventilateur (22 ; 24), disposé dans le caisson,
- au moins un bloc de matériau absorbant acoustique (40), disposé dans le caisson (12), entre le ventilateur (22 ; 24) et l'orifice de sortie (16 ; 20), et formant un conduit aéraulique (42) mettant en communication de fluide la sortie du ventilateur (22 ; 24) et l'orifice de sortie (16 ; 20), la section (S₄₂) du conduit aéraulique (42) au niveau de l'orifice de sortie (16 ; 20) étant inférieure ou sensiblement égale à la section de l'orifice de sortie (16 ; 20),
dans laquelle le caisson forme, entre le ventilateur (22 ; 24) et l'orifice (16 ; 20), un logement (44 ; 48), de préférence étanche, **caractérisée en ce que** le au moins un bloc de matériau absorbant acoustique (40) est disposé dans le logement (44 ; 48) et est amovible par rapport au logement (44 ; 48).

2. Unité de ventilation selon la revendication 1, dans laquelle la section (S₄₂) du conduit aéraulique (42) est sensiblement constante.

3. Unité de ventilation selon la revendication 1, dans laquelle la section (S₄₂) du conduit aéraulique (42) est variable, une paroi (58) séparant par exemple le conduit aéraulique (42) en deux conduits (42a ; 42b) sur une partie au moins de la longueur du conduit (42).

4. Unité de ventilation selon l'une des revendications 1 à 3, dans laquelle le conduit aéraulique (42) est courbe.

5. Unité de ventilation selon l'une quelconque des revendications précédentes, dans laquelle le au moins un bloc de matériau absorbant (40) comprend au moins une singularité comme un insert (64) en matériau distinct du matériau absorbant acoustique et/ou une découpe (60), à l'extérieur du conduit aéraulique (42).

6. Unité de ventilation selon l'une quelconque des revendications précédentes, dans laquelle le conduit aéraulique (42) est formé :
- par une pluralité de blocs de matériau absorbant superposés, éventuellement en matériaux différents ; ou
- par un bloc de matériau absorbant unique.

7. Unité de ventilation selon l'une quelconque des revendications précédentes, dans laquelle la section (S₄₀) du au moins un bloc de matériau absorbant acoustique (40) est au moins deux fois supérieure, de préférence au moins trois fois supérieure, de manière plus préférée quatre fois supérieure, à la section du conduit aéraulique (S₄₂).

8. Unité de ventilation selon l'une quelconque des revendications précédentes, dans laquelle le matériau absorbant acoustique est recouvert, au niveau du conduit aéraulique (42), d'un revêtement adapté à transmettre la pression acoustique au matériau absorbant acoustique et, de préférence, à limiter les pertes de charge dans le conduit aéraulique et/ou à éviter la diffusion de fibres que pourrait laisser échapper le matériau absorbant.

9. Unité de ventilation selon l'une quelconque des revendications précédentes, dans laquelle la hauteur de l'ensemble formé par le au moins un bloc de matériau absorbant est supérieure, de préférence au moins deux fois supérieure, au diamètre de l'orifice.

10. Unité de ventilation selon l'une quelconque des revendications précédentes, dans laquelle la section transversale du logement (44 ; 48) est sensiblement identique à la section d'un espace recevant le ventilateur (22 ; 24).

11. Unité de ventilation selon l'une quelconque des revendications précédentes, dans laquelle la hauteur du logement (44 ; 48) est sensiblement égale à la distance entre le ventilateur (22 ; 24) et l'orifice de sortie du caisson (16 ; 20).

12. Unité de ventilation selon l'une quelconque des revendications précédentes, dans laquelle la hauteur de l'ensemble du au moins un bloc de matériau absorbant acoustique (40) est sensiblement égale à la hauteur du logement (44).

13. Unité de ventilation selon l'une quelconque des revendications précédentes, dans laquelle la section du conduit aéraulique (42), côté ventilateur (22 ; 24), est sensiblement égale ou supérieure, à la section d'un orifice de sortie de l'espace recevant le ventilateur (22 ; 24).

14. Unité de ventilation selon l'une quelconque des revendications précédentes, dans laquelle le matériau absorbant acoustique est l'un parmi une mousse polyuréthane, une mousse en éthylène-propylène-diène monomère, de la mélamine, de la laine de roche, de la laine de verre, de la mousse agglomérée.

15. Unité de ventilation selon l'une quelconque des revendications précédentes, comprenant un deuxième ventilateur (24), un échangeur thermique (26) pour permettre l'échange de calories entre les flux d'air créés par les deux ventilateurs (22 ; 24), les premier et deuxième ventilateurs (22 ; 24) étant de préférence disposés en aval de l'échangeur thermique (26).

16. Unité de ventilation selon la revendication 15, comprenant en outre au moins un deuxième bloc de matériau absorbant acoustique disposé en aval du deuxième ventilateur (24).

17. Unité de ventilation selon l'une quelconque des revendications précédentes, dans laquelle le bloc de matériau absorbant acoustique (40) est amovible et forme un bloc autoportant ayant des dimensions et une forme extérieure permettant une mise en position finale du bloc de matériau absorbant acoustique (40) dans le caisson (12) sans moyens de fixation du bloc de matériau acoustique (40) au caisson (12) ni pièce de liaison entre les pièces de matériau absorbant acoustique formant le bloc de matériau acoustique (40).

18. Unité de ventilation selon l'une quelconque des revendications précédentes, dans laquelle le logement (44) est étanche pour permettre une étanchéité externe entre le logement (44) et l'extérieur de ce logement (44).

19. Unité de ventilation selon la revendication 18, dans laquelle le caisson (12) comporte au moins un premier orifice de sortie d'air (16) adapté à être raccordé à un réseau d'insufflation d'air dans un local et au moins un deuxième orifice de sortie d'air (20) adapté à être raccordé à un réseau d'extraction d'air du local, le logement (44) étant également étanche pour permettre une étanchéité interne entre un flux d'air circulant à travers le premier orifice de sortie (16) et un flux d'air circulant à travers le deuxième orifice de sortie (20).

20. Procédé de manipulation d'une unité de ventilation selon l'une quelconque des revendications précédentes, comprenant les étapes consistant à :
- ouvrir partiellement ou totalement un capot fermant une paroi du caisson (12) ;
- retirer le bloc de matériau absorbant acoustique (40) présent, ou en l'absence de bloc de matériau absorbant acoustique (40) dans le logement (44, 48) disposer un bloc de matériau absorbant acoustique (40), à l'intérieur du logement (44, 48) dans une position mettant en communication de fluide la sortie du ventilateur (22, 24) et l'orifice de sortie (16, 20) via le conduit aéraulique (42) ; et
- fermer le capot fermant la paroi du caisson (12).

## Patentansprüche

1. Lüftereinheit (10), umfassend:
- ein Gehäuse (12) mit mindestens einer Ausgangsöffnung (16; 20), die zum Verbinden mit einem Lüftungsnetz, insbesondere mit einem Netz zum Einblasen von Luft in einen zu belüftenden Raum geeignet ist,
- mindestens einen Lüfter (22; 24), der in dem Gehäuse angeordnet ist,
- mindestens einen Block aus schalldämpfendem Material (40), der in dem Gehäuse (12) zwischen dem Lüfter (22; 24) und der Ausgangsöffnung (16; 20) angeordnet ist und eine Luftleitung (42) bildet, die den Ausgang des Lüfters (22; 24) und die Ausgangsöffnung (16; 20) in Fluidkommunikation versetzt, wobei der Querschnitt (S₄₂) der Luftleitung (42) im Bereich der Ausgangsöffnung (16; 20) kleiner oder gleich dem Querschnitt der Ausgangsöffnung (16; 20) ist,
wobei das Gehäuse zwischen dem Lüfter (22; 24) und der Öffnung (16; 20) eine vorzugsweise dichte Aufnahme (44; 48) bildet, **dadurch gekennzeichnet, dass** der mindestens eine Block aus schalldämpfendem Material (40) in der Aufnahme (44; 48) angeordnet ist und in Bezug auf die Aufnahme (44; 48) lösbar ist.

2. Lüftereinheit nach Anspruch 1, wobei der Querschnitt (S₄₂) der Luftleitung (42) etwa konstant ist.

3. Lüftereinheit nach Anspruch 1, wobei der Querschnitt (S₄₂) der Luftleitung (42) variabel ist, wobei eine Wand (58) beispielsweise die Luftleitung (42) über mindestens einen Teil der Länge der Leitung (42) in zwei Leitungen (42a; 42b) trennt.

4. Lüftereinheit nach einem der Ansprüche 1 bis 3, wobei die Luftleitung (42) gekrümmt ist.

5. Lüftereinheit nach einem der vorangehenden Ansprüche, wobei der mindestens eine Block aus dämpfendem Material (40) mindestens eine Singularität wie einen Einsatz (64) aus einem Material, das sich von dem schalldämpfenden Material unterscheidet, und/oder einen Ausschnitt (60) außerhalb der Luftleitung (42) umfasst.

6. Lüftereinheit nach einem der vorangehenden Ansprüche, wobei die Luftleitung (42) gebildet ist:
- von einer Vielzahl von übereinanderliegenden Blöcken aus dämpfendem Material, eventuell aus unterschiedlichen Materialien; oder
- von einem Block aus einem einzigen dämpfenden Material.

7. Lüftereinheit nach einem der vorangehenden Ansprüche, wobei der Querschnitt (S₄₀) des mindestens einen Blocks aus schalldämpfendem Material (40) mindestens zwei Mal größer, vorzugsweise mindestens drei Mal größer, noch bevorzugter vier Mal größer als der Querschnitt der Luftleitung (S₄₂) ist.

8. Lüftereinheit nach einem der vorangehenden Ansprüche, wobei das schalldämpfende Material im Bereich der Luftleitung (42) mit einer Beschichtung bedeckt ist, die zur Übertragung des Schalldrucks an das schalldämpfende Material und vorzugsweise zur Begrenzung der Lastverluste in der Luftleitung und/oder zur Vermeidung der Diffusion von Fasern geeignet ist, wodurch dämpfendes Material entweichen könnte.

9. Lüftereinheit nach einem der vorangehenden Ansprüche, wobei die Höhe der von dem mindestens einen Block aus dämpfendem Material gebildeten Einheit höher, vorzugsweise mindestens zwei Mal höher als der Durchmesser der Öffnung ist.

10. Lüftereinheit nach einem der vorangehenden Ansprüche, wobei der transversale Querschnitt der Aufnahme (44; 48) etwa mit dem Querschnitt eines den Lüfter (22; 24) aufnehmenden Bereichs identisch ist.

11. Lüftereinheit nach einem der vorangehenden Ansprüche, wobei die Höhe der Aufnahme (44; 48) etwa gleich dem Abstand zwischen dem Lüfter (22; 24) und der Ausgangsöffnung des Gehäuses (16; 20) ist.

12. Lüftereinheit nach einem der vorangehenden Ansprüche, wobei die Höhe der Einheit des mindestens einen Blocks aus schalldämpfendem Material (40) etwa gleich der Höhe der Aufnahme (44) ist.

13. Lüftereinheit nach einem der vorangehenden Ansprüche, wobei der Querschnitt der Luftleitung (42) auf der Seite des Lüfters (22; 24) etwa gleich oder größer als der Querschnitt einer Ausgangsöffnung des den Lüfter (22; 24) aufnehmenden Bereichs ist.

14. Lüftereinheit nach einem der vorangehenden Ansprüche, wobei das schalldämpfende Material eins von einem Polyurethanschaum, einem Ethylen-Propylen-Dienmonomerschaum, von Melamin, Steinwolle, Glaswolle, von agglomeriertem Schaum ist.

15. Lüftereinheit nach einem der vorangehenden Ansprüche, umfassend einen zweiten Lüfter (24), einen Wärmetauscher (26), um den Austausch von Kalorien zwischen den von den zwei Lüftern (22; 24) erzeugten Luftströmen zu erlauben, wobei der erste und zweite Lüfter (22; 24) vorzugsweise dem Wärmetauscher (26) nachgelagert angeordnet sind.

16. Lüftereinheit nach Anspruch 15, umfassend ferner mindestens einen zweiten Block aus schalldämpfendem Material, der dem zweiten Lüfter (24) nachgelagert angeordnet ist.

17. Lüftereinheit nach einem der vorangehenden Ansprüche, wobei der Block aus schalldämpfendem Material (40) lösbar ist und einen selbsttragenden Block bildet, der Abmessungen und eine äußere Form hat, die ein Versetzen in Endposition des Blocks aus schalldämpfendem Material (40) im Gehäuse (12) ohne Befestigungsmittel des Blocks aus schalldämpfenden Material (40) am Gehäuse (12) noch Verbindungsteil zwischen den Teilen aus schalldämpfendem Material erlaubt, die den Block aus schalldämpfendem Material (40) bilden.

18. Lüftereinheit nach einem der vorangehenden Ansprüche, wobei die Aufnahme (44) dicht ist, um eine äußere Dichtigkeit zwischen der Aufnahme (44) und dem Äußeren dieser Aufnahme (44) zu erlauben.

19. Lüftereinheit nach Anspruch 18, wobei das Gehäuse (12) mindestens eine erste Luftausgangsöffnung (16) aufweist, geeignet ist, mit einem Netz zum Einblasen von Luft in einen Raum verbunden zu sein, und mindestens eine zweite Luftausgangsöffnung (20), die geeignet ist, mit einem Netz zum Ausleiten von Luft aus dem Raum verbunden zu sein, wobei die Aufnahme (44) ebenfalls dicht ist, um eine innere Dichtigkeit zwischen einem Luftstrom, der durch die erste Ausgangsöffnung (16) zirkuliert, und einem Luftstrom, der durch die zweite Ausgangsöffnung (20) zirkuliert, zu erlauben.

20. Verfahren zur Handhabung einer Lüftereinheit nach einem der vorangehenden Ansprüche, umfassend die Schritte, die darin bestehen:
- teilweises oder vollständiges Öffnen eines Deckels, der eine Wand des Gehäuses (12) verschließt;
- Entnehmen des vorhandenen Blocks aus schalldämpfendem Material (40) oder, bei Abwesenheit eines Blocks aus schalldämpfendem Material (40) in der Aufnahme (44, 48), Anordnen eines Blocks aus schalldämpfendem Material (40) im Inneren der Aufnahme (44, 48) in einer Position, bei der der Ausgang des Lüfters (22, 24) und die Ausgangsöffnung (16, 20) über die Luftleitung (42) in Kommunikation versetzt werden; und
- Schließen des Deckels, der die Wand des Gehäuses (12) verschließt.

## Claims

1. A ventilation unit (10) comprising:
- a box (12) with at least one outlet orifice (16; 20) suitable for being connected to a ventilation network, notably to a network for blowing air into a room to be ventilated,
- at least one fan (22; 24), positioned in the box,
- at least one block of acoustic absorbing material (40), positioned in the box (12), between the fan (22; 24) and the outlet orifice (16; 20), and forming an aeraulic duct (42) placing the outlet of the fan (22; 24) and the outlet orifice (16; 20) in fluid communication, the section (S₄₂) of the aeraulic duct (42) at the outlet orifice (16; 20) being smaller than or substantially equal to the section of the outlet orifice (16; 20),
wherein the box forms, between the fan (22; 24) and the orifice (16; 20), a housing (44; 48), preferably impermeable, **characterized in that** the at least one block of acoustic absorbing material (40) is positioned in the housing (44; 48) and is removable relative to the housing (44; 48).

2. The ventilation unit according to claim 1, wherein the section (S₄₂) of the aeraulic duct (42) is substantially constant.

3. The ventilation unit according to claim 1, wherein the section (S₄₂) of the aeraulic duct (42) is variable, a wall (58) for example separating the aeraulic duct (42) into two ducts (42a; 42b) over at least part of the length of the duct (42).

4. The ventilation unit according to one of claims 1 to 3, wherein the aeraulic duct (42) is curved.

5. The ventilation unit according to any one of the preceding claims, wherein the at least one block of absorbent material (40) comprises at least one singularity such as an insert (64) made from a material different from the acoustic absorbing material and/or a cutout (60), outside the aeraulic duct (42).

6. The ventilation unit according to any one of the preceding claims, wherein the aeraulic duct (42) is formed by:
- a plurality of superimposed blocks of absorbent material, optionally made from different materials; or
- a single block of absorbent material.

7. The ventilation unit according to any one of the preceding claims, wherein the section (S₄₀) of the at least one block of acoustic absorbing material (40) is at least two times greater, preferably at least three times greater, more preferably four times greater, than the section of the aeraulic duct (S₄₂).

8. The ventilation unit according to any one of the preceding claims, wherein the acoustic absorbing material is covered, at the aeraulic duct (42), with a coating suitable for transmitting the acoustic pressure to the acoustic absorbing material and, preferably, for limiting the head losses in the aeraulic duct and/or for avoiding the diffusion of fibers which could allow the absorbent material to escape.

9. The ventilation unit according to any one of the preceding claims, wherein the height of the assembly formed by the at least one block of absorbent material is greater, preferably at least two times greater, than the diameter of the orifice.

10. The ventilation unit according to any one of the preceding claims, wherein the cross-section of the housing (44; 48) is substantially identical to the section of a space receiving the fan (22; 24).

11. The ventilation unit according to any one of the preceding claims, wherein the height of the housing (44; 48) is substantially equal to the distance between the fan (22; 24) and the outlet orifice of the box (16; 20).

12. The ventilation unit according to any one of the preceding claims, wherein the height of the assembly of the at least one block of acoustic absorbing material (40) is substantially equal to the height of the housing (44).

13. The ventilation unit according to any one of the preceding claims, wherein the section of the aeraulic duct (42), on the fan (22; 24) side, is substantially equal to or greater than the section of an outlet orifice of the space receiving the fan (22; 24).

14. The ventilation unit according to any one of the preceding claims, wherein the acoustic absorbing material is selected among a polyurethane foam, an ethylene-propylene-diene monomer foam, melamine, rockwool, glass wool, bonded foam.

15. The ventilation unit according to any one of the preceding claims, comprising a second fan (24), a heat exchanger (26) to allow the exchange of calories between the air flows created by the two fans (22; 24), the first and second fans (22; 24) preferably being positioned downstream of the heat exchanger (26).

16. The ventilation unit according to claim 15, further comprising at least one second block of acoustic absorbing material positioned downstream of the second fan (24).

17. The ventilation unit according to any one of the preceding claims, wherein the block of acoustic absorbing material (40) is removable and forms a self-supporting block having dimensions and an outer shape allowing the block of acoustic absorbing material (40) to be placed in its final position in the box (12) without means for fastening the block of acoustic material (40) to the box (12) or a connecting part between the pieces of acoustic absorbing material forming the block of acoustic material (40).

18. The ventilation unit according to any one of the preceding claims, wherein the housing (44) is impermeable to allow external impermeability between the housing (44) and the outside of this housing (44).

19. The ventilation unit according to claim 18, wherein the box (12) includes at least a first air outlet orifice (16) suitable for being connected to a network for blowing air into a room and at least a second air outlet orifice (20) suitable for being connected to a network for extracting air from the room, the housing (44) also being impermeable to allow an internal impermeability between an air flow circulating through the first outlet orifice (16) and an air flow circulating through the second outlet orifice (20).

20. A method for manipulating a ventilation unit according to any one of the preceding claims, comprising the following steps:
- partially or completely opening a cover closing a wall of the box (12);
- removing the block of acoustic absorbing material (40) which is present, or in the absence of a block of acoustic absorbing material (40) in the housing (44, 48), positioning a block of acoustic absorbing material (40), inside the housing (44, 48), in a position placing the outlet of the fan (22, 24) and the outlet orifice (16, 20) in fluid communication via the aeraulic duct (42); and
- closing the cover closing the wall of the box (12).
